(19) **Europäisches Patentamt / European Patent Office / Office européen des brevets**

(11) **EP 4 412 207 A1**

(12) # EUROPEAN PATENT APPLICATION
published in accordance with Art. 153(4) EPC

(43) Date of publication:
07.08.2024 Bulletin 2024/32

(21) Application number: 22874968.5

(22) Date of filing: 28.09.2022

(51) International Patent Classification (IPC):
*H04N 19/42* (2014.01)

(52) Cooperative Patent Classification (CPC):
G06N 3/044; G06N 3/0455; G06N 3/0464;
G06N 3/0475; G06N 3/094; G06V 10/774;
G06V 10/82; H04N 19/17; H04N 19/42

(86) International application number:
PCT/CN2022/122030

(87) International publication number:
WO 2023/051583 (06.04.2023 Gazette 2023/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.09.2021 CN 202111164005

(71) Applicant: Sanechips Technology Co., Ltd.
Shenzhen, Guangdong 518055 (CN)

(72) Inventors:
• YI, Ziyao
  Shenzhen, Guangdong 518057 (CN)

• XU, Ke
  Shenzhen, Guangdong 518057 (CN)
• KONG, Dehui
  Shenzhen, Guangdong 518057 (CN)
• SONG, Jianjun
  Shenzhen, Guangdong 518057 (CN)
• REN, Cong
  Shenzhen, Guangdong 518057 (CN)
• YANG, Wei
  Shenzhen, Guangdong 518057 (CN)

(74) Representative: **Ipsilon**
Le Centralis
63, avenue du Général Leclerc
92340 Bourg-la-Reine (FR)

(54) **VIDEO CODING UNIT DIVISION METHOD AND APPARATUS, AND COMPUTER DEVICE AND COMPUTER-READABLE STORAGE MEDIUM**

(57) The present disclosure provides a video coding unit division method, including: acquiring a video image sequence including a plurality of images arranged in sequence; acquiring a convolutional neural network model trained by a deep learning algorithm as a video coding unit (CU) division model; and inputting the video image sequence into the CU division model to obtain CU division information corresponding to each image in the video image sequence. The present disclosure further provides a video coding unit division apparatus, a computer device and a computer-readable storage medium.

**EP 4 412 207 A1**

Acquire a video image sequence including a plurality of images arranged in sequence — S21

Acquire a convolutional neural network model trained by a deep learning algorithm as a video CU division model — S22

Input the video image sequence into the CU division model to obtain CU division information corresponding to each image in the video image sequence — S23

FIG. 2

**Description**

CROSS-REFERENCE TO RELATED APPLICATIONS

The present disclosure claims the priority of Chinese Patent Application No. 202111164005.4, filed on September 30, 2021, the contents of which are incorporated herein in their entirety by reference.

TECHNICAL FIELD

The present disclosure relates to the field of computer vision technologies, and in particular, to a video coding unit division method, a video coding unit division apparatus, a computer device, and a computer-readable storage medium.

BACKGROUND

In current coding unit division (also called coding unit partition) of basic video coding, a size of a basic processing structure is called a coding tree unit (CTU) in high efficiency video coding (HEVC) and versatile video coding (VVC), and is called a partition tree in AV1, with a size of a maximum unit being increased from $64\times64$luma samples in HEVC to $128\times128$ samples. Currently, relatively large homogeneous areas and relatively large pictures can be processed more efficiently. The CTU may be further divided or partitioned into coding units (CUs). The CTU and the CU may also be divided into prediction units (PUs), and share a common parameter, such as coding mode.

SUMMARY

In an aspect, an embodiment of the present disclosure provides a video coding unit division method, including: acquiring a video image sequence including a plurality of images arranged in sequence; acquiring a convolutional neural network model trained by a deep learning algorithm as a video coding unit (CU) division model; and inputting the video image sequence into the CU division model to obtain CU division information corresponding to each image in the video image sequence.

In an aspect, an embodiment of the present disclosure provides a video coding unit division apparatus, including: an acquisition module and a CU division module, the acquisition module is configured to acquire a video image sequence including a plurality of images arranged in sequence, and acquire a convolutional neural network model trained by a deep learning algorithm as a video CU division model; the CU division module is configured to input the video image sequence into the CU division model to obtain CU division information corresponding to each image in the video image sequence.

In an aspect, an embodiment of the present disclosure provides a computer device, including: at least one processor; and a storage device having at least one computer program stored thereon; the at least one computer program, executed by the at least one processor, causes the at least one processor to implement the video coding unit division method described above.

In an aspect, an embodiment of the present disclosure provides a computer-readable storage medium having a computer program stored thereon, the computer program, executed by a processor, causes the processor to implement the video coding unit division method described above.

BRIEF DESCRIPTION OF DRAWINGS

Fig. 1 is a schematic diagram of an application location of a video coding unit division method according to an embodiment of the present disclosure;
Fig. 2 is a schematic flowchart of a video coding unit division method according to an embodiment of the present disclosure;
Fig. 3 is a schematic flowchart of training a video coding unit (CU) division model according to an embodiment of the present disclosure;
Fig. 4 is a schematic diagram of acquiring ground truth (GT) according to an embodiment of the present disclosure;
Fig. 5 is a schematic structural diagram of a generative adversarial network (GAN) model according to an embodiment of the present disclosure;
Fig. 6 is a schematic structural diagram of a recurrent neural network (RNN) model according to an embodiment of the present disclosure;
Fig. 7 is a schematic structural diagram of a video coding unit division apparatus according to an embodiment of the present disclosure;

Fig. 8 is a schematic structural diagram of a video coding unit division apparatus according to an embodiment of the present disclosure; and

Fig. 9 is a block diagram of a computer device according to an embodiment of the present disclosure.

## DETAIL DESCRIPTION OF EMBODIMENTS

Exemplary embodiments are described in detail below with reference to the accompanying drawings, but the present disclosure may be embodied in different forms, and should not be construed as limited to the embodiments set forth herein. The embodiments are illustrated to make the present disclosure more thorough and complete, and for those skilled in the art more fully understanding the scope of the present disclosure.

As used herein, a term "and/or" includes any and all combinations of at least one of listed items.

The terms used in the present disclosure are for a purpose of describing particular embodiments only, and are not intended to limit the present disclosure. As used in the present disclosure, singular forms "a" and "the" are intended to include plural forms as well, i.e., to represent at least one, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

The embodiments of the present disclosure may be described with reference to plan and/or cross-sectional views with the help of idealized schematic illustrations of the present disclosure. Therefore, the example illustrations may be modified in accordance with manufacturing techniques and/or tolerances. The embodiments of the present disclosure are not limited to those shown in the accompanying drawings, but include modifications of any configuration formed based on a manufacturing process. Therefore, areas illustrated in the accompanying drawings have schematic properties, and shapes of the areas illustrated in the accompanying drawings illustrate specific shapes of the areas of elements, but are not limiting.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

For the same video quality, VVC intra-frame coding can realize about 50% improvement of compression efficiency, and provides an important guarantee for industrial application. In a coding unit compression process, the VVC usually adopts a coding unit (CU) division mode combining a quad-tree, a ternary tree and a binary tree. In a whole coding unit division process, all possible CU division modes are desired to be traversed recursively, so that the CU division mode with a minimum rate-distortion cost in all the possible CU division modes is selected as a final CU division mode.

The coding unit division process described above improves video compressibility, but greatly increases computation complexity, resulting in a prolonged computation processing time duration and a relatively low compression rate, so that real-time performance of coding is greatly challenged. In order to solve this problem, in the existing art, an algorithm such as sum of absolute differences (SAD) is used to increase the compression rate, but in this way, the video quality may be difficult to be guaranteed.

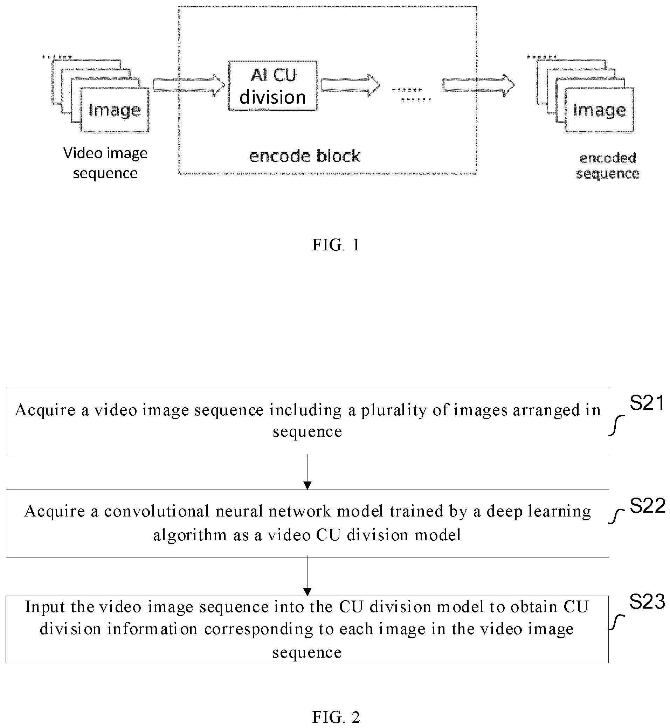

An embodiment of the present disclosure provides a video coding unit division method, as shown in Fig. 1, applied to a video coding process, for performing video coding unit division on a video image through an Artificial Intelligence (AI) technique before performing video image coding. A video coding unit division process supports basic operations and algorithms of deep learning, such as Convolution, Deconvolution, Rectified Linear Unit (ReLU), Sigmoid function, Full-Connection, Reshape function, and the like.

As shown in Fig. 2, the video coding unit division method provided in the embodiment of the present disclosure includes following operations S21 to S23.

At operation S21, acquiring a video image sequence including a plurality of images arranged in sequence.

A length of the video image sequence is N, i.e., the video image sequence includes N images arranged in sequence.

At operation S22, acquiring a convolutional neural network model trained by a deep learning algorithm as a video CU division model.

The CU division model is the convolutional neural network model trained in advance, and is obtained by training through a deep learning algorithm, and the convolutional neural network model includes, but not is limited to, a GAN model, a RNN model, or an encoder-decoder model.

At operation S23, inputting the video image sequence into the CU division model to obtain CU division information corresponding to each image in the video image sequence.

In this operation, the video image sequence in the operation S21 is used as an input of the CU division model, and an output of the CU division model is the CU division information corresponding to each image in the video image sequence, i.e., N pieces of CU division information corresponding to N images in the video image sequence can be obtained by the CU division model.

The video coding unit division method provided in the embodiment of the present disclosure includes: acquiring a video image sequence including a plurality of images arranged in sequence; acquiring a convolutional neural network model trained by a deep learning algorithm as a video CU division model; and inputting the video image sequence into the CU division model to obtain CU division information corresponding to each image in the video image sequence. According to the embodiment of the present disclosure, the convolutional neural network trained based on the deep learning algorithm serves as the CU division model, both relatively high video quality of a full search algorithm and relatively high real-time performance of an algorithm for accelerating can be guaranteed, the computation complexity in a reasoning process can be reduced and the compression rate can also be increased, the video image sequence is automatically divided into coding units by the neural network, the video quality can be guaranteed, and simultaneously, video encoding efficiency can be greatly improved, so that real-time and high-quality encoding is possible.

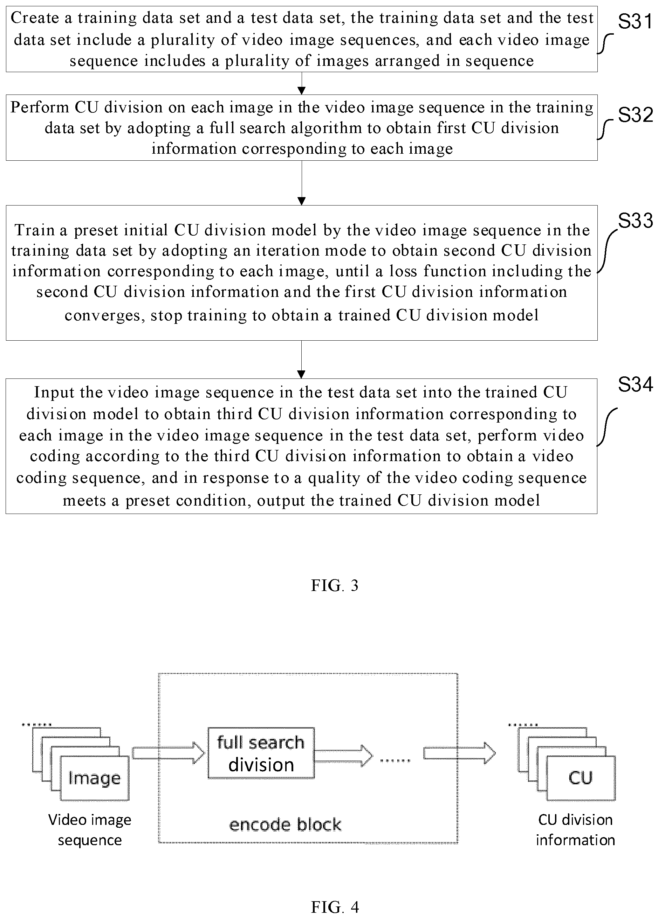

The process of training the CU division model is described in detail below with reference to Fig. 3. As shown in Fig. 3, operations of training the CU division model include following operations S31 to S34.

At operation S31, creating a training data set and a test data set, the training data set and the test data set include a plurality of video image sequences, and each video image sequence includes a plurality of images arranged in sequence.

Data of the training data set and the test data set may be obtained from data sets disclosed by Vimeo90K, REDS4, VID4 and the like, and then the obtained data is randomly divided into the training data set and the test data set according to a ratio of 9: 1 or 8: 2. The data in the training data set and the test data set includes a plurality of video image sequences, and each video image sequence includes a plurality of images arranged in sequence.

At operation S32, performing CU division on each image in the video image sequence in the training data set by adopting a full search algorithm to obtain first CU division information corresponding to each image.

Fig. 4 is a schematic diagram of acquiring GT, and as shown in Fig. 4, the full search algorithm is adopted to perform CU division on each image in the video image sequence in the training data set, so as to obtain the first CU division information $CU_{GT}$ corresponding to each image of the video image sequence in the training data set.

The full search algorithm is that all possible CU division modes are traversed recursively, the CU division mode with a minimum rate-distortion cost in all the possible CU division modes is selected as a final CU division mode, therefore, accuracy of the CU division information obtained by adopting the full search algorithm is relatively high, and the CU division information (i.e., the first CU division information $CU_{GT}$) obtained by adopting the full search algorithm is taken as the GT and as a reference value for subsequently training the CU division model, and the first CU division information $CU_{GT}$ includes a real sample.

At operation S33, training a preset initial CU division model by using the video image sequence in the training data set through an iteration mode to obtain second CU division information corresponding to each image, until a loss function including the second CU division information and the first CU division information converges, stopping the training to obtain a trained CU division model.

In this operation, the initial CU division model is trained by using the data in the training data set to obtain the second CU division information $CU_{PD}$ corresponding to each image, the second CU division information $CU_{PD}$ includes a generated sample generated by training. A preset deep learning algorithm and a loss function are adopted in the training process, and after multiple iterations, if the loss function including the second CU division information $CU_{PD}$ and the first CU division information $CU_{GT}$ converges, the training is stopped, so as to obtain the trained CU division model.

The process of training the CU division model is described in detail below with reference to specific implementations by taking different CU division models and different loss functions as examples.

At operation S34, inputting the video image sequence in the test data set into the trained CU division model to obtain third CU division information corresponding to each image in the video image sequence in the test data set, performing video coding according to the third CU division information to obtain a video coding sequence, and in response to that a quality of the video coding sequence meets a preset condition, outputting the trained CU division model.

This operation is a performance test for the CU division model, and in this operation, the data in the test data set is adopted to perform performance test on the trained CU division model, and if a quality of a video image generated by performing video image coding based on the third CU division information obtained through the trained CU division model is qualified, it is indicated that the trained CU division model passes the performance test, and thus the trained CU division model is output to be used for reasoning (i.e., for video image CU division).

It should be noted that, if the quality of the video image generated by performing video image coding based on the third CU division information obtained through the trained CU division model is substandard, it is indicated that the trained CU division model fails to pass the performance test, the operation S33 is to be executed again, that is, the CU division model continues to be trained, and if the loss function converges again, the operation S34 continues to be executed to perform the performance test on the current CU division model again.

In some implementations, the video coding unit division method may further include: after obtaining the first CU division information corresponding to each image (i.e., after the operation S32), converting the first CU division information in a first format into the first CU division information in a second format. In this operation, the first CU division information $CU_{GT}$ in the first format is integrated into a single-channel two-dimensional matrix with the same length and width as the corresponding image.

Correspondingly, the video coding unit division method may further include: in the operation S34, after obtaining the third CU division information corresponding to each image and before performing video coding according to the third CU division information to obtain the video coding sequence, converting the third CU division information in a second format into the third CU division information in a first format. In this operation, the third CU division information in a two-dimensional matrix format is converted into a desired format (i.e., the first format), so as to obtain the video coding sequence in a corresponding format through subsequent coding.

Correspondingly, performing video coding according to the third CU division information to obtain the video coding sequence includes: performing video coding according to the third CU division information in the first format to obtain the video coding sequence.

The CU division model may be a GAN model, the GAN model is an important model in the field of image generation and proposed by Goodfellow in 2014, a process of training the GAN model is a process of training two adversarial networks, i.e., a generator and a discriminator. In response to training the generator and the discriminator to be equilibrium, a random noise z is input into the GAN model, so that the GAN model outputs a generated image G(z). Since the format of the CU division information is a single-channel two-dimensional matrix with the same length and width as the image, it is very suitable for applying the GAN model as the CU division model. In the embodiment of the present application, an input of the GAN model is a video image sequence with a length of N, an output of the GAN model is CU division information with a length of N.

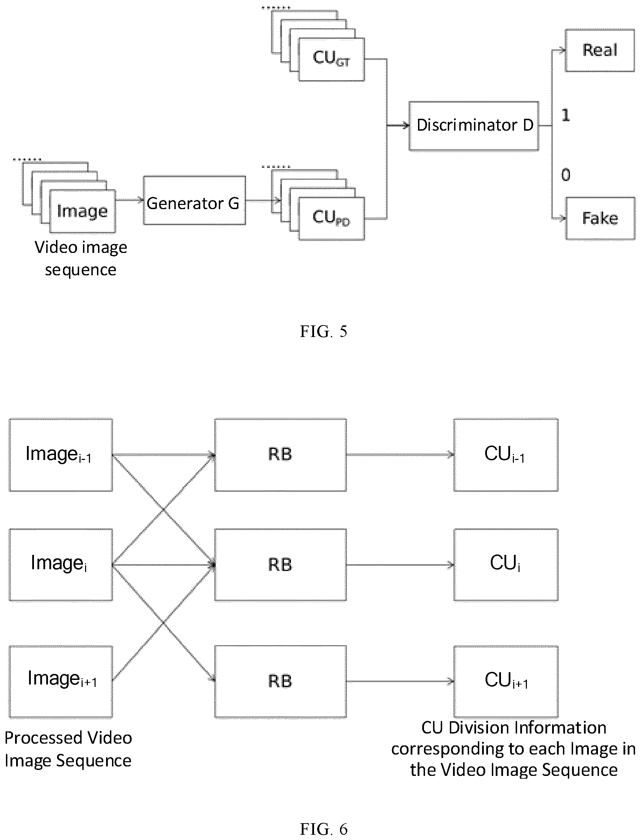

In a case where the CU division model is the GAN model, a process of training the GAN model is described in detail below with reference to Fig. 5. Fig. 5 is a schematic structural diagram of a GAN model, and as shown in Fig. 5, the GAN model includes a generator G and a discriminator D, the generator G is configured to output the second CU division information $CU_{PD}$ and input the second CU division information $CU_{PD}$ into the discriminator D, the first CU division information $CU_{GT}$ is another input of the discriminator D, the discriminator D is configured to discriminate whether the loss function converges. If a generated sample (i.e., the second CU division information $CU_{PD}$) generated by the generator G is nearly the same as a real sample (i.e., the first CU division information $CU_{GT}$) obtained by adopting the full search algorithm, the loss function converges, and if the loss function converges, the discriminator D outputs 1, otherwise, the discriminator D outputs 0.

The GAN model is trained by: training the generator G or the discriminator D individually, until the generator G and the discriminator D reach Nash equilibrium, stop the training. Specifically, the generator G is fixed during training the discriminator D individually; the discriminator D is fixed during training the generator G individually.

For training the GAN model, the generator G may be first trained individually and then the discriminator D is trained individually, or the discriminator D may be first trained individually and then the generator G is trained individually. In the embodiment of the present application, the discriminator D being trained firstly is taken as an example to for illustration. Firstly, the generator G is fixed, and the discriminator D is trained to enable that the discriminator D can distinguish the generated sample from the real sample; and then the trained discriminator D is fixed, and the generator G is trained to enable the generated sample to be approaching the real sample, so that the current discriminator D is cheated; and through multiple iterations, the generator G and the discriminator D reach equilibrium, the generated sample is infinitely approaching the real sample, the discriminator D cannot distinguish the generated sample from the real sample, and in this case, the loss function converges.

After the loss function is determined, the GAN model is started to be trained after other parameters such as an optimizer and the like are determined, and training the GAN model is to be stopped in response to that the loss function converges.

The loss function may be a binary cross-entropy loss function, as shown in equation (1):

$$\text{Loss}_{\text{gan}} = -\left(p_{\text{gt}}\log(d) + \left(1 - p_{\text{g}}\right)\log(1 - d)\right) \tag{1},$$

d is an output result of the discriminator D, $p_{\text{gt}}$ is a probability of the real sample, and $p_{\text{g}}$ is a probability of the generated sample.

It should be noted that the loss function may be in a form of a loss function extracted by adopting a rGAN algorithm or a wGAN algorithm, or may be a weighted sum of a loss of the GAN model and a loss such as L1 loss or L2 loss.

In the process of training the GAN model, frequencies of training the generator G and the discriminator D are not necessarily 1:1, and may be set and adjusted as desired.

Therefore, in some implementations, training the generator G or the discriminator D individually includes: training the generator G or the discriminator D individually according to a preset ratio of training frequencies; the preset ratio of training frequencies being a ratio of a total number of times for training the generator G individually to a total number of times for training the discriminator D individually.

It should be noted that, the discriminator D and the generator G are used in the process of training the GAN model, i.e., the discriminator D and the generator G are trained, and in a reasoning application process, only the generator G of the GAN model is used.

The CU division model may be a RNN model, the RNN model utilizes serialization information, and moreover, RNN is called a recurrent neural network because it performs the same task on each element in the sequence, and serialization information can be clearly seen, and therefore the RNN is suitable for processing video sequences. In the embodiment of the present disclosure, an input of the RNN model is a video image sequence with a length of N, an output of the RNN model is CU division information with a length of N.

In a case where the CU division model is the RNN model, a process of training the RNN model is described in detail below with reference to Fig. 6. Fig. 6 is a schematic structural diagram of a RNN model, and as shown in Fig. 6, the RNN model includes a plurality of residual blocks (RBs), and each RB is configured to output CU division information corresponding to a current frame in the video image sequence.

Training the RNN model includes following operations S1 to S3.

At operation S1, for any video image sequence in the training data set, generating each processed video image sequence by taking each image in the video image sequence as a current image, each processed video image sequence including one current image and 2t reference images, and t being an integer greater than or equal to 1.

In this operation, for any video image sequence, each image in the video image sequence is sequentially used as the current image, and the video image sequence is processed, to obtain N processed video image sequences, each processed video image sequence includes one current image and 2t reference images, and there are t reference images prior to the current image, and there are t reference images subsequent to the current image.

At operation S2, inputting each processed video image sequence into a preset initial RNN model sequentially, until the second CU division information $CU_{PD}$ corresponding to the current image in each processed video image sequence is obtained, i.e., in response to each processed video image sequence being input, the second CU division information $CU_{PD}$ corresponding to the current image is obtained.

In this operation, N processed video image sequences are sequentially input into the initial RNN model, and the second CU division information $CU_{PD}$ corresponding to the current image in each processed video image sequence is obtained in response to that each processed video image sequence is input. After the N processed video image sequences are all input into the initial RNN model, N pieces of second CU division information $CU_{PD}$ are obtained, and the N pieces of second CU division information $CU_{PD}$ include CU division information corresponding to each image of the video image sequence in the training data set.

At operation S3, calculating the loss function including the second CU division information $CU_{PD}$ and the first CU division information $CU_{GT}$, and in response to that the loss function does not converge, acquiring a next video image sequence in the training data set to generate a corresponding processed video image sequence, until the loss function converges, stopping training.

In this operation, if the loss function including the second CU division information $CU_{PD}$ and the first CU division information $CU_{GT}$ does not converge, it is indicated that the current RNN model is still desired to be trained, therefore the next video image sequence in the training data set is acquired and the operations S1 and S2 are executed. If the loss function converges, the training is stopped, and the current RNN model is a trained RNN model.

In some implementations, the processed video image sequence is generated by: in response to that a total number of reference images prior to the current image is less than t, enabling the number of the reference images prior to the current image to be equal to t by supplementing 0 or copying an image, to obtain the processed video image sequence including the current image; or in response to that a total number of reference images subsequent to the current image is less than t, enabling the number of the reference images subsequent to the current image to be equal to t by supplementing 0 or copying an image, to obtain the processed video image sequence including the current image.

For example, assuming that a length N of any video image sequence is equal to ten, the video image sequence includes an image 1, an image 2, ...... and an image 10, a processed video image sequence P1 with the image 1 serving as the current image, a processed video image sequences P2 with the image 2 serving as the current image, ......, and a processed video image sequence P10 with the image 10 serving as the current image are generated respectively. If t is equal to two, by taking the processed video image sequence P2 with the image 2 serving as the current image as an example, there is only one reference image (i.e., the image 1) prior to the image 2, and thus one reference image may be added prior to the image 2 by supplementing 0 or copying an image, thereby obtaining the processed video image sequence P2 including five images, the image 2 is located at the middle of the P2, i.e., the image 2 is the third image in the P2.

The loss function for training the RNN model may be an L1 function or a mean square error (MSE) function, or the like.

The present disclosure provides a RNN intelligent video coding unit division method based on deep learning, a CU division/partition function in video coding is implemented by optimizing the CU division model, the input of the CU division model is an un-coded video image sequence, the output of the CU division model is the CU division information corresponding to each image in the video image sequence, and the CU division information corresponding to each image is output for guiding subsequent coding operations.

Different from performing CU division by the full research algorithm or the existing algorithm for accelerating, the method provided in the embodiment of the present disclosure trains the CU division model based on the deep learning algorithm, and the deep learning algorithm can continuously improve the performance of the CU division model by training the CU division model, so that the CU division method provided in the embodiment of the present disclosure can not only have the relatively high image quality of the full search algorithm but also have the relatively high real-time performance of the algorithm for accelerating. During reasoning, the algorithm may be continuously accelerated by avoiding repeated low time complexity and by hardware such as a Graphics Processing Unit (GPU) and the like or software, so that the video quality is guaranteed with the coding speed being improved, the video coding efficiency is greatly improved with the video image quality being guaranteed, thereby real-time high-quality encoding is possible.

The video coding unit division method provided in the embodiment of the present disclosure can be applied to all aspects in which video coding is to be performed, such as a video processing unit (VPU), an algorithm built in a video codec chip, intelligent cockpit, video compression, video transmission, and the like.

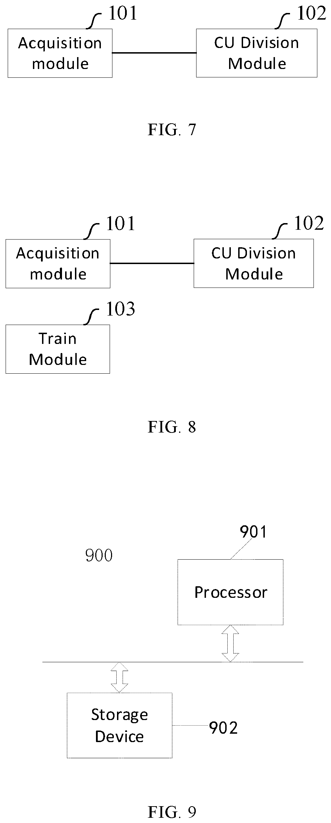

Based on the same technical concept as above, an embodiment of the present disclosure provides a video CU division apparatus, and as shown in Fig. 7, the video CU division apparatus includes an acquisition module 101 and a CU division module 102.

The acquisition module 101 is configured to acquire a video image sequence including a plurality of images arranged in sequence, and acquire a convolutional neural network model trained by a deep learning algorithm as a video CU division model.

The CU division module 102 is configured to input the video image sequence into the CU division model to obtain CU division information corresponding to each image in the video image sequence.

In some implementations, as shown in Fig. 8, the video CU division apparatus further includes a train module 103.

The train module 103 is configured to create a training data set and a test data set, the training data set and the test data set including a plurality of video image sequences, and each video image sequence including a plurality of images arranged in sequence; perform CU division on each image in the video image sequence in the training data set by adopting a full search algorithm to obtain first CU division information corresponding to each image; train a preset initial CU division model by the video image sequence in the training data set by adopting an iteration mode to obtain second CU division information corresponding to each image, until a loss function including the second CU division information and the first CU division information converges, stop training to obtain a trained CU division model; and input the video image sequence in the test data set into the trained CU division model to obtain third CU division information corresponding to each image in the video image sequence in the test data set, perform video coding according to the third CU division information to obtain a video coding sequence, and in response to that a quality of the video coding sequence meets a preset condition, output the trained CU division model.

In some implementations, the train module 103 is further configured to, after obtaining the first CU division information corresponding to each image, convert the first CU division information in a first format into the first CU division information in a second format; after obtaining the third CU division information corresponding to each image and before performing video coding according to the third CU division information to obtain the video coding sequence, convert the third CU division information in a second format into the third CU division information in a first format.

The train module 103 is configured to perform video coding according to the third CU division information in the first format to obtain the video coding sequence.

In some implementations, the CU division model may be a GAN model including a generator and a discriminator, the generator is configured to output the second CU division information and input the second CU division information into the discriminator, the first CU division information is another input of the discriminator, and the discriminator is configured to discriminate whether the loss function converges.

The train module 103 is configured to train the generator or the discriminator individually, until the generator and the discriminator reach Nash equilibrium, stop training; the generator is fixed during the discriminator being trained individually; the discriminator is fixed during the generator being trained individually.

In some implementations, the train module 103 is configured to train the generator or the discriminator individually according to a preset ratio of training frequencies; the preset ratio of training frequencies is a ratio of a total number of times for training the generator individually to a total number of times for training the discriminator individually.

In some implementations, the CU division model includes a RNN model, the train module 103 is configured to, for any video image sequence in the training data set, generate each processed video image sequence by taking each image in the video image sequence as a current image, each processed video image sequence including one current image and 2t reference images, and t being an integer greater than or equal to 1; input each processed video image sequence into a preset initial RNN model sequentially, until the second CU division information corresponding to the current image in each processed video image sequence is obtained, the second CU division information corresponding to the current image being obtained in response to that each processed video image sequence is input; and calculate the loss function including the second CU division information and the first CU division information, and in response to that the loss function does not converge, acquire a next video image sequence in the training data set to generate the processed video image sequence corresponding thereto, until the loss function converges, stop training.

In some implementations, the train module 103 is configured to, in response to that a total number of reference images prior to the current image is less than t, enable the number of the reference images prior to the current image to be equal to t by supplementing 0 or copying an image, to obtain the processed video image sequence including the current image; or in response to that a total number of reference images subsequent to the current image is less than t, enable the number of the reference images subsequent to the current image to be equal to t by supplementing 0 or copying an image, to obtain the processed video image sequence including the current image.

An embodiment of the present disclosure further provides a computer device 900, and as shown in Fig. 9, the computer device 900 includes: at least one processor 901; and a storage device 902 having at least one computer program stored thereon; the at least one computer program, executed by the at least one processor 901, causes the at least one processor 901 to implement the video coding unit division method described above.

An embodiment of the present disclosure further provides a computer-readable storage medium having a computer program stored thereon, the computer program, executed by a processor, causes the processor to implement the video coding unit division method described above.

It should be understood by those of ordinary skill in the art that all or some of the operations in the method, the functional modules/components in the apparatuses applied above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be allocated on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The present disclosure illustrates the exemplary embodiments, and although specific terms are employed, they are used and should only be interpreted in a generic and descriptive meaning but not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

**Claims**

1.    A video coding unit division method, comprising:

       acquiring a video image sequence comprising a plurality of images arranged in sequence;
       acquiring a convolutional neural network model trained by a deep learning algorithm as a video coding unit (CU) division model; and
       inputting the video image sequence into the CU division model to obtain CU division information corresponding to each image in the video image sequence.

2. The method of claim 1, wherein the CU division model is trained by:

creating a training data set and a test data set, wherein the training data set and the test data set comprise a plurality of video image sequences, and each video image sequence comprises a plurality of images arranged in sequence;
performing CU division on each image in the video image sequence in the training data set by adopting a full search algorithm to obtain first CU division information corresponding to each image;
training a preset initial CU division model by the video image sequence in the training data set by adopting an iteration mode to obtain second CU division information corresponding to each image, until a loss function comprising the second CU division information and the first CU division information converges, stopping the training to obtain a trained CU division model; and
inputting the video image sequence in the test data set into the trained CU division model to obtain third CU division information corresponding to each image in the video image sequence in the test data set, performing video coding according to the third CU division information to obtain a video coding sequence, and in response to that a quality of the video coding sequence meets a preset condition, outputting the trained CU division model.

3. The method of claim 2, further comprising:
after obtaining the first CU division information corresponding to each image, converting the first CU division information in a first format into the first CU division information in a second format.

4. The method of claim 2, further comprising:

after obtaining the third CU division information corresponding to each image and before performing video coding according to the third CU division information to obtain the video coding sequence, converting the third CU division information in a second format into the third CU division information in a first format;
performing video coding according to the third CU division information to obtain the video coding sequence comprises:
performing video coding according to the third CU division information in the first format to obtain the video coding sequence.

5. The method of claim 2, wherein the CU division model comprises a generative adversarial network (GAN) model comprising a generator and a discriminator, the generator is configured to output the second CU division information and input the second CU division information into the discriminator, the first CU division information is another input of the discriminator, the discriminator is configured to discriminate whether the loss function converges;
the GAN model is trained by:
training the generator or the discriminator individually, until the generator and the discriminator reach Nash equilibrium, stop training; wherein the generator is fixed during the discriminator being trained individually; the discriminator is fixed during the generator is trained individually.

6. The method of claim 5, wherein the training the generator or the discriminator individually comprises:
training the generator or the discriminator individually according to a preset ratio of training frequencies; the preset ratio of the training frequencies is a ratio of a total number of times for training the generator individually to a total number of times for training the discriminator individually.

7. The method of claim 2, wherein the CU division model comprises a recurrent neural network (RNN) model trained by:

for any video image sequence in the training data set, generating each processed video image sequence by taking each image in the video image sequence as a current image, each processed video image sequence comprising one current image and 2t reference images, and t being an integer greater than or equal to 1;
inputting each processed video image sequence into a preset initial RNN model sequentially, until the second CU division information corresponding to the current image in each processed video image sequence is obtained, wherein the second CU division information corresponding to the current image is obtained in response to that each processed video image sequence is input; and
calculating the loss function comprising the second CU division information and the first CU division information, and in response to that the loss function fails to converge, acquiring a next video image sequence in the training data set to generate the processed video image sequence, until the loss function converges, stop training.

8. The method of claim 7, wherein the processed video image sequence is generated by:

in response to that a total number of reference images prior to the current image is less than t, enabling the number of the reference images prior to the current image to be equal to t by supplementing 0 or copying an image, to obtain the processed video image sequence comprising the current image; or
in response to that a total number of reference images subjected to the current image is less than t, enabling the number of the reference images subjected to the current image to be equal to t by supplementing 0 or copying an image, to obtain the processed video image sequence comprising the current image.

9. A video coding unit division apparatus, comprising an acquisition module and a coding unit (CU) division module,
the acquisition module is configured to acquire a video image sequence comprising a plurality of images arranged in sequence, and acquire a convolutional neural network model trained by a deep learning algorithm as a video CU division model;
the CU division module is configured to input the video image sequence into the CU division model to obtain CU division information corresponding to each image in the video image sequence.

10. A computer device, comprising:

at least one processor; and
a storage device having at least one computer program stored thereon;
the at least one computer program, executed by the at least one processor, causes the at least one processor to implement the video coding unit division method of any one of claims 1 to 8.

11. A computer-readable storage medium having a computer program stored thereon, the computer program, executed by a processor, causes the processor to implement the video coding unit division method of any one of claims 1 to 8.

FIG. 1

| Acquire a video image sequence including a plurality of images arranged in sequence | S21 |
| Acquire a convolutional neural network model trained by a deep learning algorithm as a video CU division model | S22 |
| Input the video image sequence into the CU division model to obtain CU division information corresponding to each image in the video image sequence | S23 |

FIG. 2

Create a training data set and a test data set, the training data set and the test data set include a plurality of video image sequences, and each video image sequence includes a plurality of images arranged in sequence — S31

Perform CU division on each image in the video image sequence in the training data set by adopting a full search algorithm to obtain first CU division information corresponding to each image — S32

Train a preset initial CU division model by the video image sequence in the training data set by adopting an iteration mode to obtain second CU division information corresponding to each image, until a loss function including the second CU division information and the first CU division information converges, stop training to obtain a trained CU division model — S33

Input the video image sequence in the test data set into the trained CU division model to obtain third CU division information corresponding to each image in the video image sequence in the test data set, perform video coding according to the third CU division information to obtain a video coding sequence, and in response to a quality of the video coding sequence meets a preset condition, output the trained CU division model — S34

FIG. 3

Video image sequence → encode block [ full search division → ....... → ] → CU division information

FIG. 4

FIG. 5

FIG. 6

101

Acquisition module

102

CU Division Module

FIG. 7

101

Acquisition module

102

CU Division Module

103

Train Module

FIG. 8

900

901

Processor

Storage Device

902

FIG. 9

| | | |
|---|---|---|
| **INTERNATIONAL SEARCH REPORT** | International application No. | |
| | **PCT/CN2022/122030** | |

| | |
|---|---|
| **A. CLASSIFICATION OF SUBJECT MATTER** | |
| H04N 19/42(2014.01)i | |

According to International Patent Classification (IPC) or to both national classification and IPC

| |
|---|
| **B. FIELDS SEARCHED** |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, IEEE: 编码, 单元, 划分, 序列, 模型, 深度, 训练, 卷积, 神经网络, 测试, 全搜索, 迭代, 损失, 函数, 收敛, 质量, 格式, 对抗网络, 判别, 纳什均衡, 频次, 比值, 循环神经网络, 参考, CU, divide, sequence, model, deep, train, convolution, neural network, test, full search, iteration, loss, function, convergence, GAN, Nash equilibrium, frequency, RNN, reference

| |
|---|
| **C. DOCUMENTS CONSIDERED TO BE RELEVANT** |

| Category* | Citation of document, with indication, where appropriate, of the relevant passages | Relevant to claim No. |
|---|---|---|
| X | CN 112929658 A (ZHENGZHOU UNIVERSITY OF LIGHT INDUSTRY) 08 June 2021 (2021-06-08) description, paragraphs [0045]-[0103], and figure 1 | 1-4, 9-11 |
| A | CN 111355956 A (CAI XIAOGANG) 30 June 2020 (2020-06-30) entire document | 1-11 |
| A | CN 111429497 A (ZHENGZHOU UNIVERSITY OF LIGHT INDUSTRY) 17 July 2020 (2020-07-17) entire document | 1-11 |
| A | CN 111510728 A (BEIJING UNIVERSITY OF TECHNOLOGY) 07 August 2020 (2020-08-07) entire document | 1-11 |
| A | CN 111866511 A (XIDIAN UNIVERSITY) 30 October 2020 (2020-10-30) entire document | 1-11 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 December 2022** | **03 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| | INTERNATIONAL SEARCH REPORT | International application No. |
|---|---|---|
| | | **PCT/CN2022/122030** |

**C.** **DOCUMENTS CONSIDERED TO BE RELEVANT**

| Category* | Citation of document, with indication, where appropriate, of the relevant passages | Relevant to claim No. |
|---|---|---|
| A | WO 2018192235 A1 (TENCENT TECHNOLOGY (SHENZHEN) COMPANY LTD.) 25 October 2018 (2018-10-25) entire document | 1-11 |
| A | WO 2020227911 A1 (SHANGHAI DATA CENTER SCIENCE CO., LTD.) 19 November 2020 (2020-11-19) entire document | 1-11 |
| A | EP 3754548 A1 (SAP SE) 23 December 2020 (2020-12-23) entire document | 1-11 |

Form PCT/ISA/210 (second sheet) (January 2015)

**INTERNATIONAL SEARCH REPORT**
Information on patent family members

International application No.

**PCT/CN2022/122030**

| Patent document cited in search report | | | Publication date (day/month/year) | Patent family member(s) | | | Publication date (day/month/year) |
|---|---|---|---|---|---|---|---|
| CN | 112929658 | A | 08 June 2021 | None | | | |
| CN | 111355956 | A | 30 June 2020 | None | | | |
| CN | 111429497 | A | 17 July 2020 | None | | | |
| CN | 111510728 | A | 07 August 2020 | None | | | |
| CN | 111866511 | A | 30 October 2020 | None | | | |
| WO | 2018192235 | A1 | 25 October 2018 | EP | 3614666 | A1 | 26 February 2020 |
| | | | | CN | 108737841 | A | 02 November 2018 |
| | | | | US | 2019222842 | A1 | 18 July 2019 |
| | | | | JP | 2020500482 | A | 09 January 2020 |
| | | | | KR | 20190117708 | A | 16 October 2019 |
| WO | 2020227911 | A1 | 19 November 2020 | CN | 110225339 | A | 10 September 2019 |
| | | | | US | 2021203919 | A1 | 01 July 2021 |
| EP | 3754548 | A1 | 23 December 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111164005